# EUROPEAN PATENT APPLICATION

(11) **EP 4 786 554 A1**
(43) Date of publication of application: **05.08.2026**
(21) Application number: 24871696.1
(22) Date of filing: 29.08.2024
(51) Int. Cl.: C09J 7/20, C09J 7/29, C09J 201/00

(54) **THERMALLY CONDUCTIVE ADHESIVE SHEET**

(30) Priority: 29.09.2023 JP 2023170431
(71) Applicant: Tomoegawa Corporation, Tokyo 104-8335 (JP)
(72) Inventor: HATANO, Shuhei, Shizuoka-shi, Shizuoka 421-0192 (JP); MORIUCHI, Hideki, Shizuoka-shi, Shizuoka 421-0192 (JP)
(74) Representative: Hoffmann Eitle
(86) International application number: PCT/JP2024/030852
(87) International publication number: WO 2025/069895

(57) **Abstract**

Provided is a thermally conductive adhesive sheet having excellent peel strength.

One aspect of the present invention is a thermally conductive adhesive sheet including a thermally conductive sheet layer and an adhesive layer provided on at least one main surface of the thermally conductive sheet layer. The adhesive layer includes an adhesive agent layer formed by an adhesive agent. The thermally conductive adhesive sheet satisfies at least one of the following conditions (i) and (ii):
(i) [the elastic modulus of the adhesive agent layer at 25°C] > [the elastic modulus of the thermally conductive sheet layer at 25°C]; and
(ii) [the elastic modulus of adhesive agent layer at 80°C] > [the elastic modulus of thermally conductive sheet layer at 80°C].

## Description

### Technical Field

The present invention relates to a thermally conductive adhesive sheet.

### Background Art

Conventionally, a technique has been developed for further improving heat dissipation by interposing a thermally conductive adhesive sheet between a heat generation member and a heat dissipation member.

For example, Patent Literature 1 discloses a thermally conductive sheet for an electronic device, the thermally conductive sheet including a foam sheet and an adhesive material provided on at least one surface of the foam sheet.

### Citation List

### Patent Literature

Patent Literature 1: JP 2017-79264 A

### Summary of Invention

### Technical Problem

However, when the thermally conductive sheet according to the conventional art is attached to a heat dissipation member or the like, the thermally conductive sheet may be easily peeled off due to an external impact.

Therefore, an object of the present invention is to provide a thermally conductive adhesive sheet having excellent peel strength.

### Solution to Problem

The present inventors have conducted intensive studies and found that the aforementioned problem can be solved by a thermally conductive adhesive sheet in which a specific thermally conductive sheet layer and an adhesive layer are combined. That is, the present invention is as follows.

One aspect of the present invention is a thermally conductive adhesive sheet.

The thermally conductive adhesive sheet includes a thermally conductive sheet layer and an adhesive layer provided on at least one main surface of the thermally conductive sheet layer,
the adhesive layer includes an adhesive agent layer formed by an adhesive agent, and
the thermally conductive adhesive sheet satisfies at least one of the following conditions (i) and (ii):
   (i) [the elastic modulus of the adhesive agent layer at 25°C] > [the elastic modulus of the thermally conductive sheet layer at 25°C]; and
   (ii) [the elastic modulus of adhesive agent layer at 80°C] > [the elastic modulus of thermally conductive sheet layer at 80°C].

The thermally conductive sheet layer preferably has an elastic modulus at 25°C of 10.0 MPa to 500.0 MPa.

The thermally conductive adhesive sheet preferably has a shear strength of 0.5 MPa or more when measured under the following measurement conditions: (measurement conditions)
the shear strength is measured using a universal tensile tester; the thermally conductive adhesive sheet (having a width of 20 mm × a length of 20 mm) is sandwiched between a stainless steel plate (having a width of 30 mm × a length of 30 mm × a thickness of 1 mm) and an alumina plate (having a width of 20 mm × a length of 20 mm × a thickness of 1 mm) from its both surfaces, and is heated and pressed at 120°C and at a pressure of 1.0 MPa for 15 minutes to prepare a test piece; and while one end of the stainless steel plate is gripped by a lower chuck of the universal tensile tester (RTF-1310 manufactured by A&D Co., Ltd.), an end surface of the test piece facing the lower chuck is pushed by a stainless steel jig at a test speed of 2 mm/min, and the value of the maximum load at which the test piece is broken is taken as the shear strength.

The thickness of the adhesive layer relative to the thickness of the thermally conductive sheet layer (the thickness of the adhesive layer/the thickness of the thermally conductive sheet layer) is preferably 0.05 to 0.50.

The adhesive layer is preferably provided on each of both main surfaces of the thermally conductive sheet layer.

The thermally conductive adhesive sheet preferably has a thermal conductivity of 0.4 W/(m·K) to 10 W/(m·K).

The thermally conductive adhesive sheet has preferably a dielectric breakdown voltage of 600 V or more.

The adhesive layer preferably includes a support layer and the adhesive agent layer provided on each of both main surfaces of the support layer.

The thermally conductive adhesive sheet preferably satisfies the following condition (iii):
(iii) [the elastic modulus of the support layer at 25°C] > [the elastic modulus of the adhesive agent layer at 25°C].

A ratio of the elastic modulus of the support layer at 25°C to the elastic modulus of the adhesive agent layer at 25°C (the elastic modulus of the support layer/the elastic modulus of the adhesive agent layer) is preferably more than 2 and 100 or less.

The support layer preferably has a thickness of 5 µm to 50 µm.

The adhesive agent layer preferably has a thickness of 1 µm to 20 µm.

Another aspect of the present invention is a member for a semiconductor manufacturing device, the member including the thermally conductive adhesive sheet.

### Advantageous Effects of Invention

According to the present invention, a thermally conductive adhesive sheet having excellent peel strength is provided.

### Brief Description of Drawings

[Fig. 1] Fig. 1 is a conceptual side view of a thermally conductive adhesive sheet of a double-sided adhesive type.
[Fig. 2] Fig. 2 is a conceptual side view of a thermally conductive adhesive sheet of a single-sided adhesive type.
[Fig. 3] Fig. 3 is a conceptual side view of an adhesive layer.

### Description of Embodiments

In the present specification, when an upper limit value and a lower limit value are described separately, it is to be understood that a numerical range obtained by combining any upper limit value and any lower limit value is substantially disclosed.

In the present specification, unless otherwise specified, various measurements are performed at room temperature (25°C) as an environmental temperature.

Hereinafter, the configuration, physical properties/characteristics, production method, and application of the thermally conductive adhesive sheet will be described, but the present invention is not limited thereto.

### <<<Configuration>>>

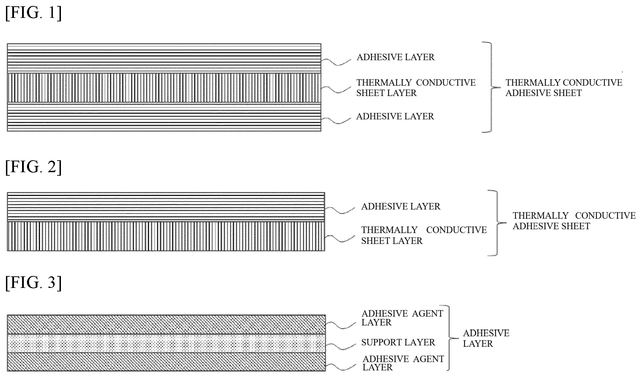

Figs. 1 and 2 are conceptual side views of thermally conductive adhesive sheets according to the present disclosure. The thermally conductive adhesive sheet includes a thermally conductive sheet layer and an adhesive layer provided on at least one main surface of the thermally conductive sheet layer. As will be described later, the adhesive layer includes at least an adhesive agent layer (a layer formed by an adhesive agent).

The thermally conductive adhesive sheet may be of a double-sided adhesive type in which adhesive layers are provided on both main surfaces of the thermally conductive sheet layer as shown in Fig. 1, or may be of a single-sided adhesive type in which an adhesive layer is provided on only one main surface of the thermally conductive sheet layer as shown in Fig. 2. As shown in Fig. 1, the thermally conductive adhesive sheet is preferably of a double-sided adhesive type. In a case where the thermally conductive adhesive sheet is of a single-sided adhesive type, a layer other than the thermally conductive sheet layer may be provided on the other surface of the thermally conductive adhesive sheet opposite to the surface on which the adhesive layer is provided.

The thermally conductive sheet layer and the adhesive agent layer constituting the thermally conductive adhesive sheet preferably satisfy at least one of the following conditions (i) and (ii), and more preferably satisfy both of the following conditions (i) and (ii).
(i) [elastic modulus of adhesive agent layer at 25°C] > [elastic modulus of thermally conductive sheet layer at 25°C]
(ii) [elastic modulus of adhesive agent layer at 80°C] > [elastic modulus of thermally conductive sheet layer at 80°C]

More specifically, the ratio of the elastic modulus of the adhesive agent layer at 25°C to the elastic modulus of the thermally conductive sheet layer at 25°C (elastic modulus of adhesive agent layer/elastic modulus of thermally conductive sheet layer) is preferably more than 1.0 and 50.0 or less, more preferably more than 1.0 and 30.0 or less, even more preferably more than 1.0 and 10.0 or less, and particularly preferably more than 1.0 and 5.0 or less.

In addition, the ratio of the elastic modulus of the adhesive agent layer at 80°C to the elastic modulus of the thermally conductive sheet layer at 80°C (elastic modulus of adhesive agent layer/elastic modulus of thermally conductive sheet layer) is preferably more than 1.0 and 100.0 or less, more preferably more than 1.0 and 50.0 or less, even more preferably more than 1.0 and 20.0 or less, and particularly preferably more than 1.0 and 10.0 or less.

When the elastic modulus of the thermally conductive sheet layer and the elastic modulus of the adhesive agent layer have such a relationship, upon attaching the thermally conductive adhesive sheet to an adherend (a heat generator or a heat radiator), adhesion (followability) to the adherend and impact absorbability are improved, which makes it easier to improve shear strength.

In a case where the thermally conductive adhesive sheet is of a double-sided adhesive type in which adhesive layers are provided on both main surfaces of the thermally conductive sheet layer, when "the thermally conductive adhesive sheet satisfies at least one of the conditions (i) and (ii)", only a combination of one adhesive layer and the thermally conductive sheet layer may satisfy at least one of the conditions (i) and (ii), but it is preferable that combinations of both adhesive layers and the thermally conductive sheet layer satisfy at least one of the conditions (i) and (ii).

Here, the elastic moduli of the thermally conductive sheet layer, the adhesive agent layer, the thermally conductive adhesive sheet, and the support layer are measured according to the following method.

### (Measurement Method)

An elastic modulus is measured using a universal tensile tester. A test piece having a width of 25 mm × a length of 150 mm is prepared. A value obtained by performing a tensile test at a test speed of 1 mm/min, while a distance between upper and lower chucks of the universal tensile tester (RTF-1310 manufactured by A&D Co., Ltd.) is set to 100 mm, and both ends of the test piece are gripped so that the length of the test piece is equal to the distance between the chucks.

For each test piece, elastic moduli at two points, an elastic modulus in one measurement direction and an elastic modulus in a measurement direction orthogonal to the one measurement direction, are measured, and an average value thereof is taken as an elastic modulus.

The overall thickness of the thermally conductive adhesive sheet varies depending on the thickness of the thermally conductive sheet layer, the thickness of the adhesive layer, and how many times each type of layer is stacked, and is not particularly limited. The overall thickness of the thermally conductive adhesive sheet is, for example, 10 µm to 2000 µm, 10 µm to 1000 µm, or 50 µm to 800 µm. More specifically, the overall thickness of the thermally conductive adhesive sheet is preferably 100 µm to 700 µm, more preferably 100 µm to 600 µm, and even more preferably 150 µm to 300 µm.

Next, the thermally conductive sheet layer and the adhesive layer constituting the thermally conductive adhesive sheet will be described.

### <<Thermally Conductive Sheet Layer>>

The thermally conductive sheet layer is a layer formed by a thermally conductive sheet.

The thermally conductive sheet layer is usually constituted by a sheet-shaped member including a polymer material and a thermally conductive material dispersed in the polymer material.

The thermal conductivity of the thermally conductive sheet layer can be appropriately adjusted depending on the application, and is not particularly limited. Examples of the thermally conductive sheet layer include a layer having a thermal conductivity of 1.0 W/(m·K) or more.

Examples of the polymer material capable of constituting the thermally conductive sheet layer include resin materials such as acrylic resins, polyamide resins, polyimide resins, polyester resins, polyolefin resins, polyurethane resins, epoxy resins, and silicone resins; and elastomers such as rubber-based elastomers (e.g., fluororubber and silicone rubber).

Examples of the thermally conductive material capable of constituting the thermally conductive sheet layer include metal materials such as copper, aluminum, gold, and silver, resin materials coated with these metal materials, carbon materials such as carbon fiber, CNT, graphene, graphite, and carbon black, metal oxides such as silicon oxide (silica), aluminum oxide (alumina), and magnesium oxide, metal nitrides such as silicon nitride, aluminum nitride, and boron nitride, metal carbides such as silicon carbide, and metal hydroxides such as magnesium hydroxide. Two or more kinds of thermally conductive materials may be combined. Examples of the thermally conductive material include materials containing carbon fibers and thermally conductive materials (thermally conductive fillers or thermally conductive fibers) other than carbon fibers.

The elastic modulus of the thermally conductive sheet layer at 25°C is not particularly limited, but is preferably 5.0 MPa or more, 10.0 MPa or more, 20.0 MPa or more, or 50.0 MPa or more, and is preferably 500.0 MPa or less, 200.0 MPa or less, 150.0 MPa or less, or 100.0 MPa or less. More specifically, the elastic modulus of the thermally conductive sheet layer at 25°C is preferably 10.0 MPa to 200.0 MPa, more preferably 20 to 150.0 MPa, and even more preferably 50 MPa to 150.0 MPa.

The elastic modulus of the thermally conductive sheet layer at 80°C is not particularly limited, but is preferably 1.0 MPa or more, 2.0 MPa or more, 5.0 MPa or more, or 10.0 MPa or more, and is preferably 400.0 MPa or less, 200.0 MPa or less, 150.0 MPa or less, or 100.0 MPa or less. More specifically, the elastic modulus of the thermally conductive sheet layer at 80°C is preferably 2.0 MPa to 200.0 MPa, more preferably 5.0 to 150.0 MPa, and even more preferably 10.0 MPa to 150.0 MPa.

The elastic modulus of the thermally conductive sheet layer can be adjusted by changing the type of resin material and the ratio of the blending amounts of the resin material and the thermally conductive material. In addition, it is also possible to adjust the elastic modulus of the thermally conductive sheet layer by adjusting the orientation of the thermally conductive material in the thermally conductive sheet layer or by localizing the thermally conductive material in the thermally conductive sheet layer.

Here, as described above, the thermally conductive sheet layer preferably satisfies [elastic modulus of adhesive agent layer at 25°C] > [elastic modulus of thermally conductive sheet layer at 25°C] and/or [elastic modulus of adhesive agent layer at 80°C] > [elastic modulus of thermally conductive sheet layer at 80°C]. In other words, the thermally conductive sheet layer is preferably configured to have a lower elastic modulus than the adhesive agent layer. One aspect of such a thermally conductive sheet layer having a low elastic modulus is a sheet-shaped member obtained by slicing a block in which a fibrous thermally conductive material is oriented in a resin (so as to cut fibers). Such a sheet-shaped member has a structure in which the fiber axis direction of the thermally conductive material is aligned perpendicular to the sheet surface, so that the elastic modulus is reduced. As such a sheet-shaped member, for example, one disclosed in JP 2022-119196 A or the like can be used. Another aspect of such a thermally conductive sheet layer having a low elastic modulus is a sheet-shaped member obtained by slicing a laminate obtained by stacking a plurality of sheets in which a fibrous thermally conductive material is oriented in a resin. As such a sheet-shaped member, one disclosed in JP 2018-127530 A, JP 2021-158274 A, or the like can be used.

The thickness of the thermally conductive sheet layer is not particularly limited, but is preferably 10 µm to 1000 µm, 50 µm to 800 µm, or 100 µm to 600 µm. From the viewpoint of achieving both thermal conductivity and adhesiveness in a well-balanced manner, the thickness of the thermally conductive sheet layer is preferably 50 µm to 800 µm, more preferably 100 µm to 600 µm, and even more preferably 100 µm to 300 µm.

The thermally conductive sheet layer may contain other components. Examples of the other components include dispersants, curing agents, tackifiers, plasticizers, flame retardants, antioxidants, stabilizers, and colorants.

### <<Adhesive Layer>>

Fig. 3 is a conceptual side view of an adhesive layer. The adhesive layer includes an adhesive agent layer. In addition, the adhesive layer includes, for example, (aspect 1) a double-sided tape type adhesive layer including a support layer and adhesive agent layers provided on both main surfaces of the support layer as shown in Fig. 3, and (aspect 2) a substrate-less type adhesive layer formed only by an adhesive layer. The adhesive layer is preferably of a double-sided tape type from the viewpoint of improving insulating properties.

The elastic modulus of the adhesive agent layer at 25°C is not particularly limited, but is preferably 10.0 MPa or more, 20.0 MPa or more, or 50.0 MPa or more, and is preferably 500.0 MPa or less, 200.0 MPa or less, or 100.0 MPa or less. More specifically, the elastic modulus of the adhesive agent layer at 25°C is preferably 10.0 MPa or more and 500.0 MPa or less, more preferably 20.0 MPa or more and 200.0 MPa or less, and even more preferably 50.0 MPa or more and 100.0 MPa or less.

The elastic modulus of the adhesive agent layer at 80°C is not particularly limited, but is preferably 10.0 MPa or more, 20.0 MPa or more, or 50.0 MPa or more, and is preferably 500.0 MPa or less, 200.0 MPa or less, or 100.0 MPa or less. More specifically, the elastic modulus of the adhesive agent layer at 80°C is preferably 10.0 MPa or more and 500.0 MPa or less, more preferably 20.0 MPa or more and 200.0 MPa or less, and even more preferably 50.0 MPa or more and 100.0 MPa or less.

The thickness of the adhesive layer varies depending on the layer structure of the adhesive layer, and is not particularly limited. The thickness of the adhesive layer is, for example, preferably 1 µm to 200 µm, more preferably 1 µm to 100 µm, even more preferably 1 µm to 50 µm, and still more preferably 1 µm to 25 µm. By setting the thickness in this manner, it is easy to improve the thermal conductivity.

The thickness of the adhesive layer relative to the thickness of the thermally conductive sheet layer (thickness of adhesive layer/thickness of thermally conductive sheet layer) is preferably 0.05 to 0.50 or 0.05 to 0.25. By setting the thickness ratio in this manner, it is easy to improve the thermal conductivity.

In a case where the adhesive layer has a multilayer structure, the thickness of the adhesive layer refers to the total thickness of all the layers (for example, the support layer and the adhesive agent layer) constituting the adhesive layer.

### <Adhesive Agent Layer>

The adhesive agent layer is made of an adhesive agent. The adhesive agent constituting the adhesive agent layer is not particularly limited, and examples thereof include an acryl-based adhesive, an epoxy-based adhesive, a urethane-based adhesive, a polyimide-based adhesive, and a silicone-based adhesive. From the viewpoint of heat resistance and the like, the adhesive agent constituting the adhesive agent layer is preferably a polyimide-based adhesive agent.

In addition, the adhesive agent layer is preferably formed of a thermosetting adhesive agent. In a case where the adhesive agent layer is formed of a thermosetting adhesive agent, it is easy to achieve both peel strength and insulating properties. In addition, in a case where the adhesive agent layer is formed of a thermosetting adhesive agent, each of the elastic modulus of the adhesive agent layer at 25°C and the elastic modulus of the adhesive agent layer at 80°C described above is taken as an elastic modulus of an adhesive agent layer after a thermosetting adhesive agent is heated and cured at 120°C for 15 minutes.

The adhesive agent layer is a layer obtained by applying (and optionally drying) an adhesive agent onto the support layer, or a layer obtained by applying a film-like adhesive agent onto the support layer. Such an adhesive agent layer is cured as necessary after the thermally conductive adhesive sheet is attached to the adherend.

The adhesive agent layer may contain other components. Examples of the other components include thermally conductive materials, dispersants, curing agents, tackifiers, plasticizers, flame retardants, antioxidants, stabilizers, colorants, and binder components.

The thickness of the adhesive agent layer is not particularly limited, but is preferably 1 µm to 50 µm, more preferably 1 µm to 20 µm, even more preferably 1 µm to 15 µm, still more preferably 1 µm to 10 µm, and particularly preferably 1 µm to 8 µm. By setting the thickness in this manner, it is easy to improve the thermal conductivity.

### <Support Layer>

The support layer is usually a resin film. Examples of the resin constituting the resin film include polyethylene terephthalate, triacetyl cellulose, polyethylene naphthalate, polymethyl methacrylate, polycarbonate, polyimide, polyethylene, polypropylene, polyvinyl alcohol, and polyvinyl chloride. From the viewpoint of improving the dielectric breakdown voltage and the like, the support layer is preferably a polyimide-based film.

The thickness of the support layer is not particularly limited, but is preferably 1 µm to 100 µm, more preferably 5 µm to 50 µm, even more preferably 5 µm to 30 µm, and still more preferably 5 µm to 15 µm. By setting the thickness in this manner, it is easy to achieve both the dielectric breakdown voltage and the thermal conductivity.

Here, the adhesive layer and the support layer preferably satisfy the following condition (iii).

### (iii) [elastic modulus of support layer at 25°C] > [elastic modulus of adhesive agent layer at 25°C]

More specifically, the ratio of the elastic modulus of the support layer at 25°C to the elastic modulus of the adhesive agent layer at 25°C (elastic modulus of support layer/elastic modulus of adhesive agent layer) is not particularly limited, but is preferably more than 1, 2 or more, or 5 or more, and preferably 1000 or less, 500 or less, 100 or less, 20 or less, or 10 or less. More specifically, this ratio is preferably more than 1 and 1000 or less, more preferably 2 to 500, even more preferably 2 to 100, still more preferably 2 to 20, and particularly preferably 2 to 10.

The elastic modulus of the support layer at 25°C is not particularly limited, and is preferably 20 MPa to 10,000 MPa.

When the elastic modulus of the adhesive agent layer and the elastic modulus of the support layer have such a relationship, it is easy to improve the shear strength and the like of the thermally conductive adhesive sheet.

### <<<Physical Properties/Characteristics>>>

### <<Shear Strength>>

The thermally conductive adhesive sheet is not particularly limited, but the shear strength is preferably 0.5 MPa or more, more preferably 1.0 MPa or more, and even more preferably 1.2 MPa or more, when measured under the following measurement conditions:
(measurement conditions)
the shear strength is measured using a universal tensile tester; the thermally conductive adhesive sheet (having a width of 20 mm × a length of 20 mm) is sandwiched between a stainless steel plate (having a width of 30 mm × a length of 30 mm × a thickness of 1 mm) and an alumina plate (having a width of 20 mm × a length of 20 mm × a thickness of 1 mm) from both surfaces of the thermally conductive adhesive sheet, and is heated and pressed at 120°C and at a pressure of 1.0 MPa for 15 minutes to prepare a test piece; and while one end of the stainless steel plate is gripped by a lower chuck of the universal tensile tester (RTF-1310 manufactured by A&D Co., Ltd.), an end surface of the test piece facing the lower chuck is pushed by a stainless steel jig at a test speed of 2 mm/min, and the value of the maximum load at which the test piece is broken is taken as the shear strength.

### <<Thermal Conductivity>>

The thermal conductivity of the thermally conductive adhesive sheet measured under the following measurement conditions is not particularly limited, but is preferably 0.4 W/(m·K) to 10 W/(m·K), more preferably 0.6 W/(m·K) to 10 W/(m·K), even more preferably 0.8 W/(m·K) to 10 W/(m·K), still more preferably 1.0 W/(m·K) to 10 W/(m·K), and particularly preferably 1.2 W/(m·K) to 10 W/(m·K).

### (measurement conditions)

A thermal conductivity is measured by a steady-state method. A test piece is prepared by punching a measurement target into a circular shape of 50 mmφ. The test piece is measured using a steady-state method thermal conductivity measuring device (GH-1 manufactured by Advance Riko Inc.), and the obtained measurement value is taken as a thermal conductivity.

### <<Dielectric Breakdown Voltage>>

The dielectric breakdown voltage of the thermally conductive adhesive sheet measured under the following measurement conditions is preferably 600 V or more, and more preferably 1000 V or more.

### (measurement conditions)

A dielectric breakdown voltage is measured in accordance with JIS C 2110-1. The thermally conductive adhesive sheet is evaluated at a constant voltage for 60 seconds as to whether there is dielectric breakdown, and the maximum voltage at which no dielectric breakdown occurred in the thermally conductive adhesive sheet is taken as a dielectric breakdown voltage. As a voltage condition, for example, the initial voltage is set to 100 V, and the test is performed while increasing the voltage by 100 V.

### <<<Production Method>>>

The thermally conductive adhesive sheet can be produced according to a conventionally known method. For example, the thermally conductive adhesive sheet can be produced by preparing an adhesive layer in advance and attaching the adhesive layer onto a main surface of a thermally conductive sheet, or applying an adhesive agent (alternatively, an adhesive agent solution obtained by diluting an adhesive agent with an organic solvent) onto a main surface of a thermally conductive sheet and drying the adhesive agent as necessary (further stacking a support layer or another adhesive agent layer as necessary).

### <<<Application>>>

The thermally conductive adhesive sheet according to the present disclosure is preferably used for application in which it is attached to a heat dissipation member (or a heat generation member), and is more preferably used for application in which it is interposed between the heat dissipation member and the heat generation member. Examples of the heat dissipation member include a heat sink. Examples of the heat generation member include a semiconductor element, a laser element, a coil, a power device, an electrostatic chuck, and a motor. More specifically, the thermally conductive adhesive sheet according to the present disclosure is preferably applied to a member constituting a semiconductor device, a laser light irradiation device, a semiconductor manufacturing device, or the like. In other words, the technology according to the present disclosure may provide a member for a semiconductor device, a member for a laser light irradiation device, or a member for a semiconductor manufacturing device, each including a thermally conductive adhesive sheet.

The thermally conductive adhesive sheet according to the present disclosure is used with an adhesive agent layer cured as necessary after the thermally conductive adhesive sheet is attached to the heat dissipation member (or the heat generation member).

### Examples

### <<<Raw Material>>>

### <<Adhesive Layer>>

### <Adhesive Agent>

### (Adhesive agent 1: polyimide-based adhesive agent)

100 parts by mass of polyimide resin (SMP-5008PGA manufactured by Shin-Etsu Chemical Co., Ltd.)

### (Adhesive agent 2: polyimide-based adhesive agent)

20 parts by mass of polyimide resin (SMP-5008PGA manufactured by Shin-Etsu Chemical Co., Ltd.)
77 parts by mass of bisphenol A-type epoxy resin (JER828 manufactured by Mitsubishi Chemical Corporation)
3 parts by mass of curing agent (CUREZOL 2E4MZ manufactured by Shikoku Chemicals Corporation)

### (Adhesive agent 3: olefin-based adhesive agent)

100 parts by mass of olefin-based resin (TUFTEC H1041, manufactured by Asahi Kasei Chemicals Corporation)

### <Support Layer>

Polyimide film (Kapton20EN, 50EN, 100EN, 200EN manufactured by DU PONT-TORAY CO., LTD.)
Elastic modulus at 25°C: 5000 MPa
(The thickness of the support layer is shown in Tables 1 and 2.)

### <<Thermally Conductive Sheet Layer>>

Sheets 1 to 5 were produced as thermally conductive sheet layers. Each of the sheets 1 to 5 has a thermal conductivity of 1.0 W/(m·K) or more. Hereinafter, a method for producing each sheet will be described. The thicknesses of the respective sheets were adjusted to be the values shown in Tables 1 and 2.

### <Sheet 1>

### (Raw Materials for Sheet 1)

45 parts by mass of fluororubber (Viton A-100, manufactured by The Chemours Company)
45 parts by mass of pitch-based carbon fibers having an average fiber length of 120 µm
10 parts by mass of carbon nanotube (manufactured by FUJIFILM Wako Pure Chemical Corporation, with a diameter of 15 nm and a length of 10 µm)

### (Preparation of Sheet 1)

A solution in which each raw material was dissolved and dispersed in 300 parts by mass of isophorone was poured into a Teflon (registered trademark) resin mold (100 mm × 50 mm) having a hollow quadrangular prism shape, heated at 120°C for 1 hour under reduced pressure conditions, and then heat-dried at 200°C for 1 hour to prepare a molded body. The molded body was taken out from the resin mold, and then cut using a slicer so as to have a predetermined thickness, thereby obtaining sheet 1.

### <Sheets 2 to 4>

Sheets 2 to 4 were produced similarly to sheet 1 except that the raw materials were changed. The raw materials used for producing sheets 2 to 4 are described below.

### (Raw Materials for Sheet 2)

70 parts by mass of fluororubber (Viton A-100, manufactured by The Chemours Company)
20 parts by mass of pitch-based carbon fibers having an average fiber length of 120 µm
15 parts by mass of carbon nanotube (manufactured by FUJIFILM Wako Pure Chemical Corporation, with a diameter of 15 nm and a length of 10 µm)

### (Raw Materials for Sheet 3)

80 parts by mass of fluororubber (Viton A-100, manufactured by The Chemours Company)
5 parts by mass of pitch-based carbon fibers having an average fiber length of 120 µm
15 parts by mass of carbon nanotube (manufactured by FUJIFILM Wako Pure Chemical Corporation, with a diameter of 15 nm and a length of 10 µm)

### (Raw Materials for Sheet 4)

20 parts by mass of fluororubber (Viton A-500, manufactured by The Chemours Company)
75 parts by mass of pitch-based carbon fibers having an average fiber length of 120 µm
5 parts by mass of carbon nanotube (manufactured by FUJIFILM Wako Pure Chemical Corporation, with a diameter of 15 nm and a length of 10 µm)

### <Sheet 5>

### (Raw Materials for Sheet 5)

44.5 parts by mass of silicone resin containing alkenyl groups at both molecular chain terminals (one-component liquid silicone)
0.5 parts by mass of platinum catalyst
45 parts by mass of pitch-based carbon fibers having an average fiber length of 120 µm
10 parts by mass of carbon nanotube (manufactured by FUJIFILM Wako Pure Chemical Corporation, with a diameter of 15 nm and a length of 10 µm)

### (Preparation of Sheet 5)

A solution in which each raw material was kneaded and dispersed was poured into a Teflon (registered trademark) resin mold (100 mm × 50 mm) having a hollow quadrangular prism shape, and heated and cured at 120°C for 1 hour under reduced pressure conditions to prepare a molded body. The molded body was taken out from the resin mold, and then cut using a slicer so as to have a predetermined thickness, thereby obtaining sheet 5.

### <<<Production of Thermally Conductive Adhesive Sheet>>>

### <<Examples 1 and 3 to 14 and Comparative Example 1>>

The combinations of raw materials used are shown in Tables 1 and 2.

An adhesive agent (adhesive agents 1 to 3) was dissolved and mixed in 300 parts by mass of tetrahydrofuran to prepare an adhesive agent solution. The adhesive agent solution was applied onto both main surfaces of the support layer and dried at 150°C for 3 minutes to produce a double-sided adhesive tape having a support layer and adhesive agent layers provided on both surfaces of the support layer.

Next, the double-sided adhesive tapes were attached to both main surfaces of the thermally conductive sheet layer to produce a thermally conductive adhesive sheet according to each of Examples 1 and 3 to 14 and Comparative Example 1.

The thicknesses of the respective layers are as shown in Tables 1 and 2.

### << Example 2>>

The combination of raw materials used is shown in Table 1.

Adhesive agent 1 was dissolved and mixed in 300 parts by mass of tetrahydrofuran to prepare an adhesive agent solution. The adhesive agent solution was applied onto a PET film subjected to release treatment and dried at 150°C for 3 minutes to obtain an adhesive sheet which is a single-layer adhesive agent layer.

Next, the obtained adhesive sheets were attached to both main surfaces of the thermally conductive sheet layer, and the PET film subjected to release treatment was peeled off to produce a thermally conductive adhesive sheet according to Example 2.

The thicknesses of the respective layers are as shown in Table 1.

### <<<Physical Properties/Evaluation>>>

An elastic modulus at 25°C and an elastic modulus at 80°C of each adhesive agent layer, and an elastic modulus at 25°C and an elastic modulus at 80°C of each thermally conductive sheet were measured on the basis of the method described above. The elastic modulus of each adhesive agent layer in each of Examples 1 and 3 to 14 and Comparative Example 1 was measured using a single-layer adhesive agent layer obtained by forming an adhesive agent layer under the same conditions as in the method for producing each adhesive agent layer, except that the support layer was changed to a PET film subjected to release treatment, and peeling off the film.

A shear strength, a thermal resistance, and a dielectric breakdown voltage of the thermally conductive adhesive sheet were measured on the basis of the method described above, and evaluated according to the following evaluation criteria. The evaluation results are shown in Tables 1 and 2.

### (Shear Strength)

⊙: The shear strength is 1.2 MPa or more.
○: The shear strength is 0.8 MPa or more and less than 1.2 MPa.
△: The shear strength is 0.5 MPa or more and less than 0.8 MPa.
×; The shear strength is less than 0.5 MPa.

### (Thermal Conductivity)

⊙: The value of thermal conductivity is 1.0 W/(m·K) or more.
○: The value of thermal conductivity is 0.7 W/(m·K) or more and less than 1.0 W/(m·K).
△: The value of thermal conductivity is 0.4 W/(m·K) or more and less than 0.7 W/(m·K).
×; The value of thermal conductivity is less than 0.4 W/(m·K).

### (Dielectric Breakdown Voltage)

⊙: The dielectric breakdown voltage is 1000 V or more.
○: The dielectric breakdown voltage is 600 V or more and less than 1000 V.
×: The dielectric breakdown voltage is less than 600 V.

One evaluated as × for the shear strength, the thermal resistance, or the dielectric breakdown voltage was determined to be unacceptable.

**[Table 1]**

| | | | | Example 1 | Example 2 | Example 3 | Example 4 | Example 5 | Example 6 | Example 7 | Example 8 |
|---|---|---|---|---|---|---|---|---|---|---|---|
| Adhesive layer | Adhesive agent layer | Type | - | Adhesive agent 1 | Adhesive agent 1 | Adhesive agent 1 | Adhesive agent 2 | Adhesive agent 3 | Adhesive agent 2 | Adhesive agent 1 | Adhesive agent 1 |
| | | Thickness | µm | 5 | 15 | 5 | 5 | 5 | 5 | 10 | 20 |
| | | Elastic modulus of adhesive agent layer at 25° C | MPa | 88.3 | 88.3 | 88.3 | 457.2 | 11.3 | 457.2 | 88.3 | 88.3 |
| | | Elastic modulus of adhesive agent layer at 80° C | MPa | 87.3 | 87.3 | 87.3 | 450.1 | 9.9 | 450.1 | 87.3 | 87.3 |
| | Support layer | Type | - | Polyimide | - | Polyimide | Polyimide | Polyimide | Polyimide | Polyimide | Polyimide |
| | | Thickness | µm | 12.5 | - | 12.5 | 12.5 | 12.5 | 12.5 | 12.5 | 12.5 |
| | [Elastic modulus of support layer/elastic modulus of adhesive agent layer] at 25° C | | - | 57 | - | 57 | 11 | 442 | 11 | 57 | 57 |
| Thermally conductive sheet layer | | Type | - | Sheet 1 | Sheet 1 | Sheet 5 | Sheet 1 | Sheet 2 | Sheet 2 | Sheet 1 | Sheet 1 |
| | | Thickness | µm | 200 | 200 | 200 | 200 | 200 | 200 | 200 | 200 |
| | | Thickness of adhesive layer/ thickness of thermally conductive sheet layer | - | 0.11 | 008 | 011 | 0.11 | 0.11 | 0.11 | 0.16 | 0.26 |
| | | Elastic modulus of thermally conductive sheet layer at 25° C | MPa | 80.0 | 80.0 | 75.0 | 80.0 | 10.2 | 10.2 | 80.0 | 80.0 |
| | | Elastic modulus of thermally conductive sheet layer at 80° C | MPa | 20.0 | 20.0 | 73.0 | 20.0 | 4.8 | 4.8 | 20.0 | 20.0 |
| Physical properties /evaluation | [Elastic modulus of adhesive agent layer/ elastic modulus of thermally conductive sheet layer] at 25° C | | - | 1.10 | 1.10 | 1.10 | 5.72 | 1.11 | 44.82 | 1.10 | 1.10 |
| | [Elastic modulus of adhesive agent layer/ elastic modulus of thermally conductive sheet layer] at 80° C | | - | 4.37 | 4.37 | 4.37 | 2251 | 2.06 | 93.77 | 4.37 | 4.37 |
| | Shear strength | | MPa | 1.50 | 1.40 | 1.20 | 1.40 | 0.90 | 0.90 | 1.50 | 1.50 |
| | Thermal conductivity | | W/m·K | 1.3 | 1.5 | 1.1 | 1.0 | 1.6 | 1.3 | 0.9 | 0.6 |
| | Dielectric breakdown voltage | | v | 1000< | 700 | 1000< | 1000< | 1000< | 1000< | 1000< | 1000< |

**[Table 2]**

| | | | | Example 9 | Example 10 | Example 11 | Example 12 | Example 13 | Example 14 | Example 15 | Example 16 | Comparative example 1 |
|---|---|---|---|---|---|---|---|---|---|---|---|---|
| Adhesive layer | Adhesive agent layer | Type | | Adhesive agent 1 | Adhesive agent 1 | Adhesive agent 1 | Adhesive agent 1 | Adhesive agent 1 | Adhesive agent 1 | Adhesive agent 1 | Adhesive agent 1 | Adhesive agent 2 |
| | | Thickness | µm | 5 | 5 | 5 | 5 | 5 | 5 | 5 | 5 | 5 |
| | | Elastic modulus of adhesive agent layer at 25° C | MPa | 88.3 | 88.3 | 88.3 | 883 | 883 | 88.3 | 88.3 | 88.3 | 457.2 |
| | | Elastic modulus of adhesive agent layer at 80° C | MPa | 87.3 | 87.3 | 87.3 | 873 | 873 | 87.3 | 87.3 | 87.3 | 450.1 |
| | Support layer | Type | - | Polyimide | Poly imide | Polyimide | Polyimide | Polyimide | Polyimide | Polyimide | Polyimide | Polyimide |
| | | Thickness | µm | 12.5 | 12.5 | 12.5 | 125 | 5 | 25 | 50 | 12.5 | 12.5 |
| | [Elastic modulus of support layer/elastic modulus of adhesive agent layer] at 25° C | | - | 57 | 57 | 57 | 57 | 57 | 57 | 57 | 57 | 11 |
| Thermally conductive sheet layer | | Type | - | Sheet 1 | Sheet 1 | Sheet 1 | Sheet 1 | Sheet 1 | Sheet 1 | Sheet 1 | Sheet 3 | Sheet 4 |
| | | Thickness | µm | 50 | 100 | 550 | 700 | 200 | 200 | 200 | 200 | 200 |
| | | Thickness of adhesive layer/ thickness of thermally conductive sheet layer | - | 0.45 | 0.23 | 0.04 | 0.03 | 0.08 | 0.18 | 030 | 0.11 | 0.11 |
| | | Elastic modulus of thermally conductive sheet layer at 25° C | MPa | 80.0 | 80.0 | 80.0 | 800 | 800 | 800 | 800 | 7.1 | 503.2 |
| | | Elastic modulus of thermally conductive sheet layer at 80° C | MPa | 20.0 | 20.0 | 20.0 | 200 | 200 | 20.0 | 20.0 | 60 | 460.1 |
| Physical properties /evaluation | [Elastic modulus of adhesive agent layer/ elastic modulus of thermally conductive sheet layer] at 25° C | | - | 1.10 | 1.10 | 1.10 | 1.10 | 1.10 | 1.10 | 1.10 | 12.44 | 0.91 |
| | [Elastic modulus of adhesive agent layer/ elastic modulus of thermally conductive sheet layer] at 80° C | | - | 4.37 | 4.37 | 4.37 | 4.37 | 4.37 | 4.37 | 4.37 | 14.55 | 0.98 |
| | Shear strength | | MPa | 0.80 | 1.20 | 1.00 | 1.00 | 1.40 | 1.50 | 1.00 | 060 | 040 |
| | Thermal conductivity | | W/m·K | 0.5 | 0.8 | 2.7 | 3.2 | 1.6 | 1.0 | 0.7 | 1.4 | 03 |
| | Dielectric breakdown voltage | | v | 1000< | 1000< | 1000< | 1000< | 900 | 1000< | 1000< | 1000< | 1000< |

### Industrial Applicability

The thermally conductive adhesive sheet according to the present invention, which has excellent peel strength, is preferably used for application in which it is attached to a heat dissipation member such as a heat sink or a heat generation member such as a semiconductor element, a laser element, a coil, a power device, or a motor.

### CROSS-REFERENCE TO RELATED APPLICATIONS

The present application claims priority based on Japanese Patent Application No. 2023-170431 filed with the Japan Patent Office on September 29, 2023, the entire disclosure of which is entirely incorporated herein by reference.

## Claims

1. A thermally conductive adhesive sheet comprising a thermally conductive sheet layer and an adhesive layer provided on at least one main surface of the thermally conductive sheet layer,
wherein the adhesive layer includes an adhesive agent layer formed by an adhesive agent, and
the thermally conductive adhesive sheet satisfies at least one of the following conditions (i) and (ii):
(i) [the elastic modulus of the adhesive agent layer at 25°C] > [the elastic modulus of the thermally conductive sheet layer at 25°C]; and
(ii) [the elastic modulus of the adhesive agent layer at 80°C] > [the elastic modulus of the thermally conductive sheet layer at 80°C].

2. The thermally conductive adhesive sheet according to claim 1, wherein the elastic modulus of the thermally conductive sheet layer at 25°C is 10.0 MPa to 500.0 MPa.

3. The thermally conductive adhesive sheet according to claim 1, wherein the thermally conductive adhesive sheet has a shear strength of 0.5 MPa or more when measured under the following measurement conditions:
(measurement conditions)
the shear strength is measured using a universal tensile tester; the thermally conductive adhesive sheet (having a width of 20 mm × a length of 20 mm) is sandwiched between a stainless steel plate (having a width of 30 mm × a length of 30 mm × a thickness of 1 mm) and an alumina plate (having a width of 20 mm × a length of 20 mm × a thickness of 1 mm) from both surfaces of the thermally conductive adhesive sheet, and is heated and pressed at 120°C and at a pressure of 1.0 MPa for 15 minutes to prepare a test piece; and while one end of the stainless steel plate is gripped by a lower chuck of the universal tensile tester (RTF-1310 manufactured by A&D Co., Ltd.), an end surface of the test piece facing the lower chuck is pushed by a stainless steel jig at a test speed of 2 mm/min, and the value of the maximum load at which the test piece is broken is taken as the shear strength.

4. The thermally conductive adhesive sheet according to claim 1, wherein the thickness of the adhesive layer relative to the thickness of the thermally conductive sheet layer (the thickness of the adhesive layer/the thickness of the thermally conductive sheet layer) is 0.05 to 0.50.

5. The thermally conductive adhesive sheet according to claim 1, wherein the adhesive layer is provided on each of both main surfaces of the thermally conductive sheet layer.

6. The thermally conductive adhesive sheet according to claim 1, wherein the thermally conductive adhesive sheet has a thermal conductivity of 0.4 W/(m·K) to 10 W/(m·K).

7. The thermally conductive adhesive sheet according to claim 1, wherein the thermally conductive adhesive sheet has a dielectric breakdown voltage of 600 V or more.

8. The thermally conductive adhesive sheet according to any one of claims 1 to 7, wherein the adhesive layer includes a support layer and the adhesive agent layer provided on each of both main surfaces of the support layer.

9. The thermally conductive adhesive sheet according to claim 8, wherein the thermally conductive adhesive sheet satisfies the following condition (iii):
(iii) [the elastic modulus of the support layer at 25°C] > [the elastic modulus of the adhesive agent layer at 25°C].

10. The thermally conductive adhesive sheet according to claim 8, wherein a ratio of an elastic modulus of the support layer at 25°C to the elastic modulus of the adhesive agent layer at 25°C (the elastic modulus of the support layer/the elastic modulus of the adhesive agent layer) is more than 2 and 100 or less.

11. The thermally conductive adhesive sheet according to claim 8, wherein the support layer has a thickness of 5 µm to 50 µm.

12. The thermally conductive adhesive sheet according to claim 8, wherein the adhesive agent layer has a thickness of 1 µm to 20 µm.

13. A member for a semiconductor manufacturing device, the member comprising the thermally conductive adhesive sheet according to claim 1.
